# EUROPEAN PATENT APPLICATION

(11) **EP 1 523 183 A1**
(43) Date of publication of application: **13.04.2005**
(21) Application number: 03764196.6
(22) Date of filing: 14.07.2003
(51) Int. Cl.: H04N 5/91, H04N 5/92, G11B 20/10, G11B 20/12, G11B 27/034

(54) **DIGITAL CONTENT DIVISION DEVICE, DIGITAL CONTENT REPRODUCTION DEVICE, DIGITAL CONTENT DIVISION METHOD, PROGRAM, AND RECORDING MEDIUM**

(30) Priority: 17.07.2002 JP 2002208384
(71) Applicant: MATSUSHITA ELECTRIC INDUSTRIAL CO., LTD., Kadoma-shi, Osaka 571-8501 (JP)
(72) Inventor: UEDA, Takeshi, Kadoma-shi, Osaka 571-0078 (JP)
(74) Representative: Grünecker, Kinkeldey, Stockmair & Schwanhäusser Anwaltssozietät
(86) International application number: PCT/JP2003/008933
(87) International publication number: WO 2004/008756

(57) **Abstract**

There has been a problem that in the reproduction of a divided content, the reproduction starts at a position different from that specified by a user at the dividing. A digital content dividing apparatus wherein when a reproduction start video frame is specified in a digital content which is recorded in a video recording standard and which comprises a plurality of programs each constructed from a plurality of CELLs each comprising a plurality of VOBUs each comprising video frames composed of an I frame, a P frame, and/or a B frame, the program is divided at the boundary of a VOBU, and wherein the apparatus comprises: inputting section 55 of specifying a reproduction start video frame; and controlling section 54 of carrying out dividing at a position preceding a VOBU containing the nearest I frame prior to the reproduction start video frame having been specified, so as to divide the program.

## Description

### TECHNICAL FIELD

The present invention relates to a digital content dividing apparatus for dividing a digital content in the editing of a digital content containing video data and audio data, as well as to a digital content reproducing apparatus, a digital content dividing method, a program, and a recording medium.

### BACKGROUND ART

In the prior art, the creation and the editing of a digital content containing video data and audio data have been carried out using an expensive authoring system or the like. In such an expensive authoring system or the like, in the editing of a digital content, an edited digital content is generated in a state that the data before edited is recorded and retained in a hard disk drive or the like.

However, recent advent of recording-reproducing apparatuses such as a DVD-RAM and the like allows the creation and the editing of a digital content to be carried out easily using authoring software on a personal computer connected to a DVD-RAM drive or the like. Creation and editing of a digital content is disclosed, for example, in JP-A-H11-273314. The entire disclosure of JP-A-H11-273314 is incorporated herein by reference in its entirety. In the creation and the editing of a digital content carried out in a state connected to such a DVD-RAM drive or the like, edited data is generated without retaining in general the data before edited.

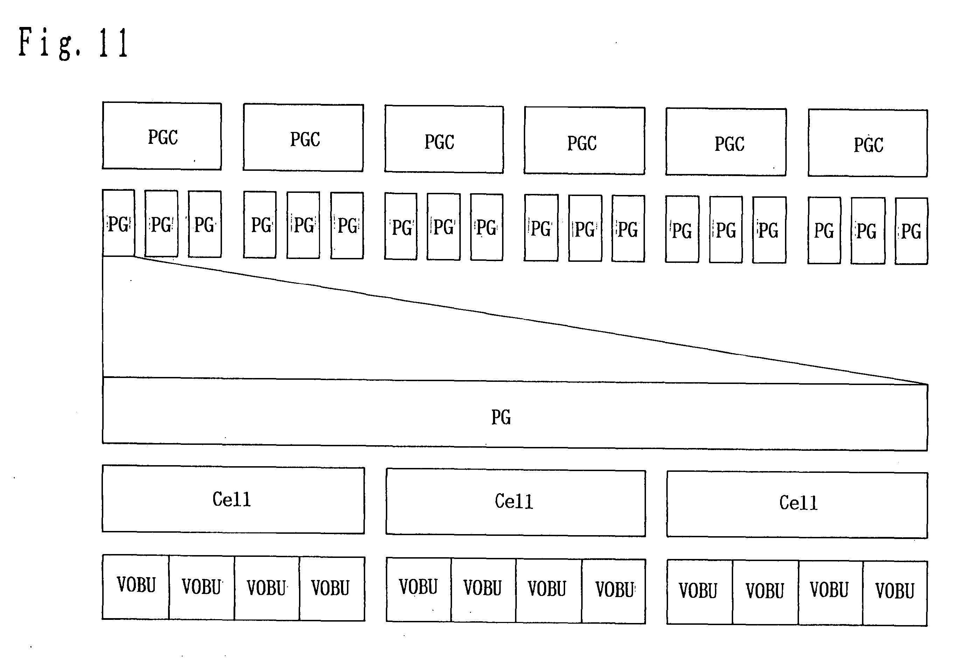

In an exemplary case of a DVD-RAM storing a plurality of movies, a digital content is recorded in management data structure as shown in Figure 11. A PGC (Program Chain) constitutes the maximum unit of data recorded on the disk, and is composed of a set of PGs (Programs). A program generally constitutes one scene, and is composed of a set of Cells. A Cell constitutes the minimum access unit in the reproduction of data, and contains the addresses of a plurality of VOBUs (Video OBject Units) to be reproduced. A VOBU corresponds to an integer multiple of a GOP (Group Of Pictures) of MPEG, and is composed of video data of 0.4-1 . 0 sec. Here, the boundary of a GOP does not generally agree with the boundary of a VOBU.

In short, a GOP of an MPEG stream constitutes a VOBU, while a plurality of VOBUs constitute a cell serving as the minimum access unit in reproduction. Then, a plurality of cells constitute a program constituting one scene, while a plurality of programs constitute a program chain.

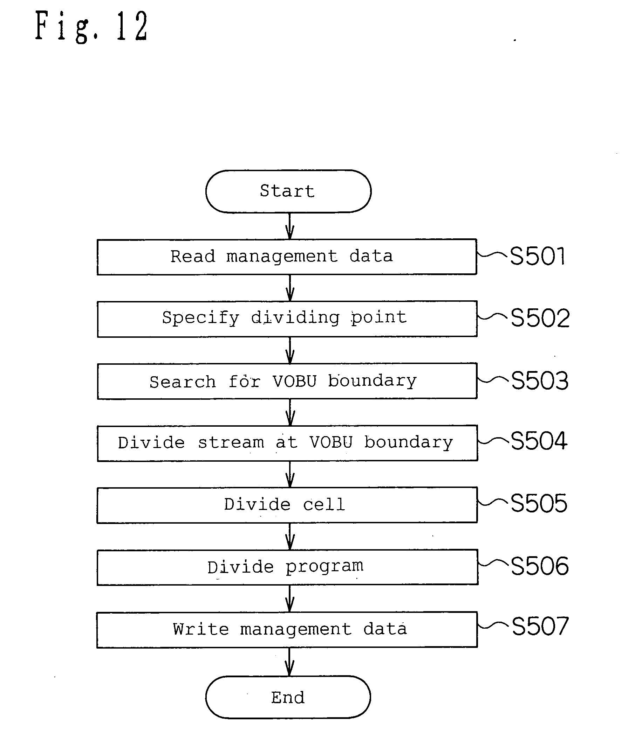

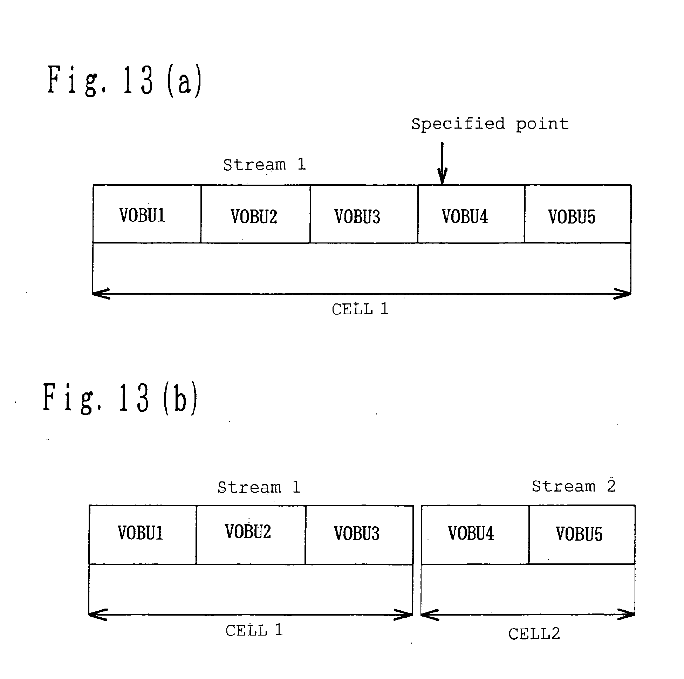

In the creation and the editing of a digital content having such configuration, carried out frequently are such processes as the cutting out of an arbitrary cell from a program constituting one scene or as the dividing of a program. Such processes of cutting out or dividing in the prior art are described below with reference to Figures 12 and 13(a)-(b). Figure 12 is a flowchart showing the flow of a dividing process in the prior art. Figures 13(a)-(b) are schematic diagrams illustrating the program dividing. In Figures 13(a) - (b), Figure (a) shows a not yet divided content, while Figure (b) shows a divided content.

First, the management information of a digital content is read (S501), so that the positions of the cell and VOBUs are extracted. Then, when a user specifies a frame position where dividing is desired (S502), a VOBU boundary preceding (or following) the specified frame is searched for (S503). For example, when the user specifies the frame as shown in Figure 13(a), the stream and the cell are divided at the boundary of a VOBU3 which is the closer of the adjacent VOBUs relative to the specified frame as shown in Figure 13(b) (S504 and S505). As a result, the content is divided (S506), so that the divided content is stored in a recording medium or the like (S507).

Nevertheless, in the prior art method of digital content dividing, the dividing of stream data is carried out at the boundary of the minimum unit (VOBU). Further, a cell specifying a reproduction start frame and a reproduction end frame is also divided at the boundary of a VOBU. This has caused a problem in that the divided content starts at a position different from that specified by the user.

Another problem which has been caused is that when a frame specified by the user is specified as the reproduction start frame after the dividing in a cell, in the case that the frame is the one that cannot be reproduced without referring to the preceding frame such as the case of a B frame of MPEG, reproduction is difficult to start at the frame specified by the user unless a frame to be referred to is present in the divided stream.

Yet another problem which has been caused is that when a frame specified by the user is specified as the reproduction end frame after the dividing in a cell, in the case that the frame is the one that cannot be reproduced without referring to the following frame such as the case of a B frame of MPEG, reproduction is difficult to complete and end at the frame specified by the user unless a frame to be referred to is present in the divided stream.

Another further problem which has been caused is that when the digital content to be divided contains also audio data, and when a frame specified by the user is specified as the reproduction start frame after the dividing in a cell, reproduction of corresponding audio is difficult to start at the frame specified by the user unless audio data corresponding to the specified frame is present in the divided stream.

### DISCLOSURE OF INVENTION

With considering the above-mentioned problems, an object of the invention is to provide a digital content dividing apparatus,a digital content reproducing apparatus, a digital content dividingmethod, a program, and a recording medium, which allow reproduction to start accurately at a position specified by a user, in the case that a content is divided.

With considering the above-mentioned problems, another object of the invention is to provide a digital content dividing apparatus, a digital content reproducing apparatus, a digital content dividing method, a program, and a recording medium, which allow reproduction to complete accurately until a position specified by a user, in the case that a content is divided.

To solve the above problems, a first invention of the present invention is a digital content dividing apparatus wherein when a reproduction start video frame is specified in a digital content which is recorded in a video recording standard and which comprises a plurality of programs each constructed from a plurality of CELLs each comprising a plurality of VOBUs each comprising video frames composed of an I frame, a P frame, and/or a B frame, said program is divided at a boundary of said VOBU, and wherein said apparatus comprises:
specifying means of specifying a reproduction start video frame; and
dividing means of carrying out dividing at a position preceding a VOBU containing the nearest I frame prior to said reproduction start video frame having been specified, so as to divide said program.

A second invention of the present invention is a digital content dividing apparatus wherein when a reproduction start video frame is specified in a digital content which is recorded in a video recording standard and which comprises a plurality of programs each constructed from a plurality of CELLs each comprising a plurality of VOBUs each provided with video frames composed of an I frame, a P frame, and/or a B frame and including an audio pack, said program is divided at a boundary of said VOBU, and wherein said apparatus comprises:
specifying means of specifying a reproduction start video frame; and
dividing means of carrying out dividing at a position preceding a VOBU provided with the nearest said audio pack prior to said reproduction start video frame having been specified, so as to divide said program.

A third invention of the present invention is a digital content dividing apparatus according to the first or the second invention of the present invention, wherein in the dividing of said program, when said CELL is divided, said dividingmeans sets the reproduction start time of the latter part of said divided CELL to be the time corresponding to said reproduction start video frame.

A fourth invention of the present invention is a digital content dividing apparatus according to the first or the second invention of the present invention, wherein in the dividing of said program, when said CELL is divided, on the basis of whether (1) said reproduction start video frame is located at or prior to a predetermined frame number from the beginning of said VOBU containing said reproduction start video frame or (2) said reproduction start video frame is located posterior to a predetermined frame number from the beginning of said VOBU containing said reproduction start video frame, said dividing means determines the beginning VOBU of the latter part of said divided CELL.

A fifth invention of the present invention is a digital content dividing apparatus wherein when a reproduction end video frame is specified in a digital content which is recorded in a video recording standard and which comprises a plurality of programs each constructed from a plurality of CELLs each comprising a plurality of VOBUs each comprising a video frame composed of an I frame, a P frame, and/or a B frame, said program is divided at a boundary of said VOBU, and wherein said apparatus comprises:
specifying means of specifying a reproduction end video frame; and
dividing means of carrying out dividing at a position following a VOBU containing the nearest I frame posterior to said reproduction end video frame having been specified, so as to divide said program.

A sixth invention of the present invention is a digital content dividing apparatus according to the fifth invention of the present invention, wherein in the dividing of said program, when said CELL is divided, said dividing means sets the reproduction end time of the former part of said divided CELL to be the time corresponding to said reproduction end video frame.

A seventh invention of the present invention is a digital content dividing apparatus according to the fifth invention of the present invention, wherein in the dividing of said program, when said CELL is divided, on the basis of whether (1) said reproduction end video frame is located at or posterior to a predetermined frame number from the end of said VOBU containing said reproduction end video frame or (2) said reproduction end video frame is located prior to a predetermined frame number from the end of said VOBU containing said reproduction end video frame, said dividing means determines the end VOBU of the former part of said divided CELL.

An eighth invention of the present invention is a digital content reproducing apparatus for reproducing a program divided by the digital content dividing apparatus according to the third invention of the present invention, wherein
in the reproduction of the latter part of said divided program, when said CELL is divided, reproduction starts at the video frame specified by the reproduction start time of the latter part of said divided CELL.

A ninth invention of the present invention is a digital content reproducing apparatus for reproducing a program divided by the digital content dividing apparatus according to the sixth invention of the present invention, wherein
in the reproduction of the former part of said divided program, when said CELL is divided, reproduction completes until the video frame specified by the reproduction end time of the former part of said divided CELL.

A tenth invention of the present invention is a digital content dividing method wherein when a reproduction start video frame is specified in a digital content which is recorded in a video recording standard and which comprises a plurality of programs each constructed from a plurality of CELLs each comprising a plurality of VOBUs each comprising video frames composed of an I frame, a P frame, and/or a B frame, said program is divided at a boundary of said VOBU, and wherein said method comprises:
a specifying step of specifying a reproduction start video frame; and
a dividing step of carrying out dividing at a position preceding a VOBU containing the nearest I frame prior to said reproduction start video frame having been specified, so as to divide said program.

An eleventh invention of the present invention is a digital content dividing method wherein when a reproduction start video frame is specified in a digital content which is recorded in a video recording standard and which comprises a plurality of programs each constructed from a plurality of CELLs each comprising a plurality of VOBUs each provided with video frames composed of an I frame, a P frame, and/or a B frame and including an audio pack, said program is divided ataboundaryof said VOBU, and wherein said method comprises :
a specifying step of specifying a reproduction start video frame; and
a dividing step of carrying out dividing at a position preceding a VOBU provided with the nearest said audio pack prior to said reproduction start video frame having been specified, so as to divide said program.

A twelfth invention of the present invention is a digital content dividing method wherein when a reproduction end video frame is specified in a digital content which is recorded in a video recording standard and which comprises a plurality of programs each constructed from a plurality of CELLs each comprising a plurality of VOBUs each comprising video frames composed of an I frame, a P frame, and/or a B frame, said program is divided at a boundary of said VOBU, and wherein said method comprises:
a specifying step of specifying a reproduction end video frame; and
a dividing step of carrying out dividing at a position following a VOBU containing the nearest I frame posterior to said reproduction end video frame having been specified, so as to divide said program.

A thirteenth invention of the present invention is a program for causing a computer to serve as:
the specifying means of specifying a reproduction start video frame; and
the dividing means of carrying out dividing at a position preceding a VOBU containing the nearest I frame prior to said reproduction start video frame having been specified, so as to divide said program; of the digital content dividing apparatus according to the first invention of the present inveniton.

A fourteenth invention of the present invention is a program for causing a computer to serve as:
the specifying means of specifying a reproduction start video frame; and
the dividing means of carrying out dividing at a position preceding a VOBU provided with the nearest said audio pack prior to said reproduction start video frame having been specified, so as to divide said program; of the digital content dividing apparatus according to the second invention of the present invention.

A fifteenth invention of the present invention is a program for causing a computer to serve as:
the specifying means of specifying a reproduction end video frame; and
the dividing means of carrying out dividing at a position following a VOBU containing the nearest I frame posterior to said reproduction end video frame having been specified, so as to divide said program; of the digital content dividing apparatus according to the fifth invention of the present invention.

A sixteenth invention of the present invention is a computer-processable recording medium carrying the program according to any one of the thirteenth to the fifteenth inventions of the present invention.

An example of the present invention comprises: a first step of specifying a reproduction start frame after the dividing; a second step of searching for the beginning frame of unit data containing said reproduction start frame, and then carrying out dividing such that the video object containing this beginning frame becomes the beginning object after the dividing; and a third step of setting said reproduction start frame as the beginning frame of the digital content after the dividing.

As a result, in the second step, the beginning data of the unit video data is contained in the beginning object after the dividing, while in the third step, the reproduction start frame is set. By virtue of this, in the reproduction of the divided content, the reproduction starts at the specified frame.

Further, in an example of digital content dividing method according to the invention, in said second step, the beginning object after the dividing is determined on the basis of whether the reproduction start frame is located prior or posterior to a predetermined frame relative to the beginning of the video object.

This reduces the time necessary for search, and hence permits rapid determination of the beginning object after the dividing.

### BRIEF DESCRIPTION OF DRAWINGS

Figure 1 is a block diagram showing the configuration of a recording and reproducing apparatus according to Embodiments 1 and 2 of the invention.
Figure 2 (a) is a schematic diagram illustrating a situation of a not yet divided digital content according to Embodiments 1 and 2 of the invention.
Figure 2 (b) is a schematic diagram illustrating a situation of a divided digital content according to Embodiments 1 and 2 of the invention.
Figure 2 (c) is a schematic diagram illustrating a situation of a divided digital content according to Embodiments 1 and 2 of the invention.
Figure 3 is a flowchart illustrating the operation of dividing a digital content according to Embodiment 1 of the invention.
Figure 4 is a diagram illustrating frame reference according to MPEG standard.
Figure 5 is a diagram showing management information of a digital content before dividing according to Embodiments 1 and 2 of the invention.
Figure 6 is a diagram showing management information of a digital content after dividing according to Embodiments 1 and 2 of the invention.
Figure 7 is a diagram showing management information of a digital content after dividing according to Embodiments 1 and 2 of the invention.
Figure 8 is a schematic diagram illustrating the dividing of a digital content according to Embodiment 2 of the invention.
Figure 9 is a schematic diagram illustrating the dividing of a digital content according to Embodiment 2 of the invention.
Figure 10 is a flowchart illustrating the dividing of a digital content according to Embodiment 2 of the invention.
Figure 11 is a schematic diagram of the data structure of a DVD.
Figure 12 is a flowchart illustrating the operation of dividing a digital content according to the prior art.
Figure 13 (a) is a schematic diagram illustrating a situation of a not yet divided digital content according to the prior art.
Figure 13 (b) is a schematic diagram illustrating a situation of a divided digital content according to the prior art.

### [Description of the Reference Numerals]

- 51: Recording and reproducing apparatus
- 52: Signal inputting section
- 53: Encoder
- 54: Controlling section
- 55: Inputting section
- 56: Disk controlling section
- 57: Decoder
- 58: Signal outputting section
- 98: Specified point 1
- 99: Specified point 2
- 100: Stream 1
- 101: Stream 2
- 102: Stream 3
- 103: Stream 4
- 104: Stream 5

### BEST MODE FOR CARRYING OUT THE INVENTION

Embodiments of the invention are described below with reference to the drawings.

### [Embodiment 1]

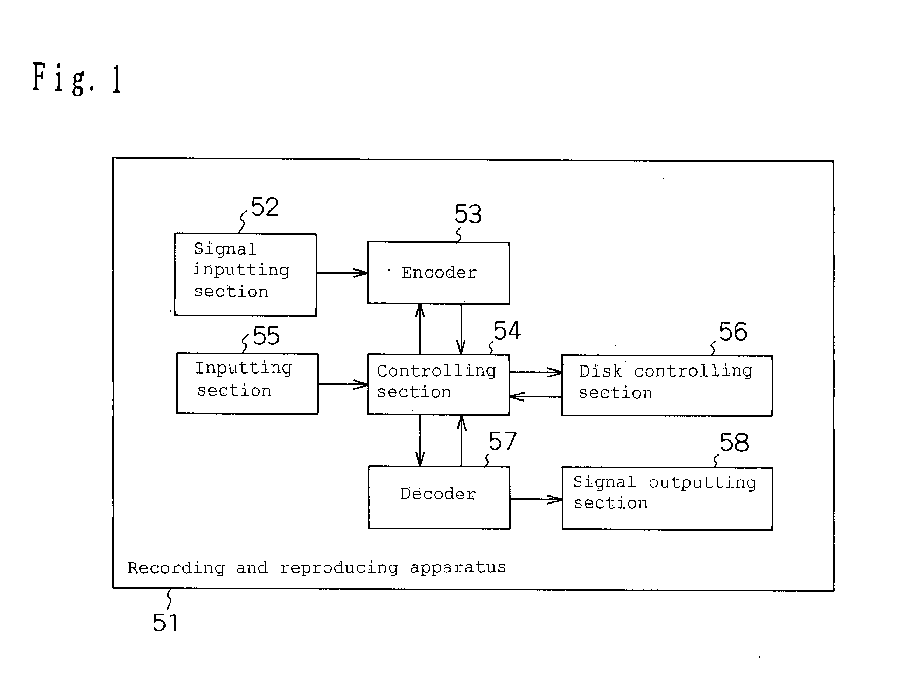

Figure 1 shows the configuration of a recording and reproducing apparatus 51 according to Embodiment 1. The recording and reproducing apparatus 51 is an apparatus capable of recording and reproducing an MPEG stream into and from the recording medium of a DVD-RAM.

The recording and reproducing apparatus 51 comprises a signal inputting section 52, an encoder 53, a controlling section 54, an inputting section 55, a disk controlling section 56, a decoder 57, and a signal outputting section 58.

The signal inputting section 52 is means of inputting (receiving) an audio-video signal.

The encoder 53 is means of encoding audio-video signals inputted to the signal inputting section 52 and thereby generating an MPEG stream.

The MPEG stream indicates an MPEG2 transport stream or the like, while MPEG stands for Moving Picture Experts Group.

The controlling section 54 is means of controlling the encoder 53, the decoder 57 , the disk controlling section 56, and the inputting section 55.

The inputting section 55 is means of inputting (receiving) a recording instruction from a user.

The disk controlling section 56 is means of receiving via the controlling section 54 an MPEG stream generated by the encoder 53, and then recording the received MPEG transport stream into the recording medium of the DVD-RAM in such a manner that the stream is provided with management data structure according to a DVD video recording standard. That is , the disk controlling section 56 is means of recording the MPEG stream into the recording medium of the DVD-RAM, and at the same time generating the data of the management data structure according to the DVD video recording standard so as to record also this data into the recording medium of the DVD-RAM.

The disk controlling section 56 serves also as means of reproducing and restoring the MPEG stream recorded in the recording medium of the DVD-RAM, by using the data of the management data structure based on the DVD video recording standard which is recorded in the recording medium of the DVD-RAM.

The decoder 57 is means of receiving from the controlling section 54 the MPEG stream reproduced and restored in the disk controlling section 56, and then expanding the compression of the received MPEG stream.

The signal outputting section 58 is means of outputting the signal the compression of which has been expanded in the decoder 57 , as an analog audio-video signal to an external device such as a display unit.

The operation of the present embodiment is described below.

Described first is the operation that an audio-video signal is recorded in the recording medium of the DVD-RAM.

First, the inputting section 55 receives a recording instruction issued by a user, and then notifies the issue of the recording instruction to the controlling section 54.

On receiving the notification of the issue of the recording instruction from the inputting section 55, the controlling section 54 instructs the encoder 53 to encode the audio-video signal inputted from the signal inputting section 52.

The signal inputting section 52 receives the audio-video signal, and outputs the inputted audio-video signal to the encoder 53.

On receiving from the controlling section 54 the instruction of encoding the inputted audio-video signal, the encoder 53 encodes the audio-video signal inputted from the signal inputting section 52, thereby generates an MPEG stream, and then outputs the generated MPEG stream to the controlling section 54.

The disk controlling section 56 receives from the controlling section 54 the MPEG stream outputted to the controlling section 54, then records the MPEG transport stream into the recording medium of the DVD-RAM, and at the same time generates the data of the management data structure based on the DVD video recording standard and records them into the recording medium of the DVD-RAM.

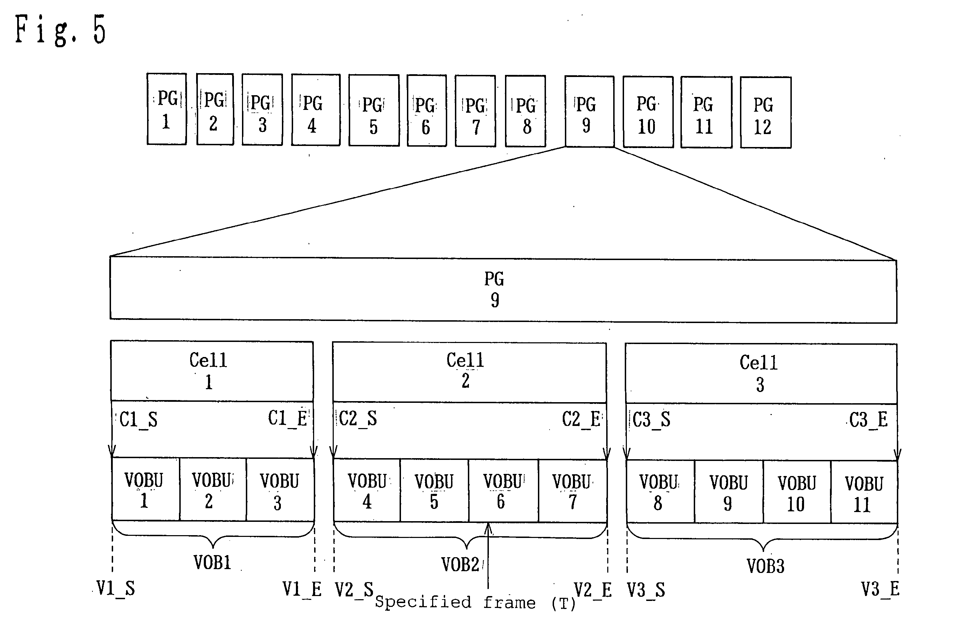

That is, in the recording medium of the DVD-RAM, the MPEG stream is recorded as a part of the management data structure based on the DVD video recording standard, together with the data of the management data structure. In the following description, the management data structure based on the DVD video recording standard is referred to simply as the management data structure. That is, the MPEG stream is recorded in the recording medium of the DVD-RAM in a manner provided with the management data structure. Such a digital content, that is, the MPEG stream and the data of the management data structure recorded in the recording medium of the DVD-RAM, corresponds to that shown in Figure 5.

The above-mentioned description is the operation that an audio-video signal is recorded in the recording medium of the DVD-RAM.

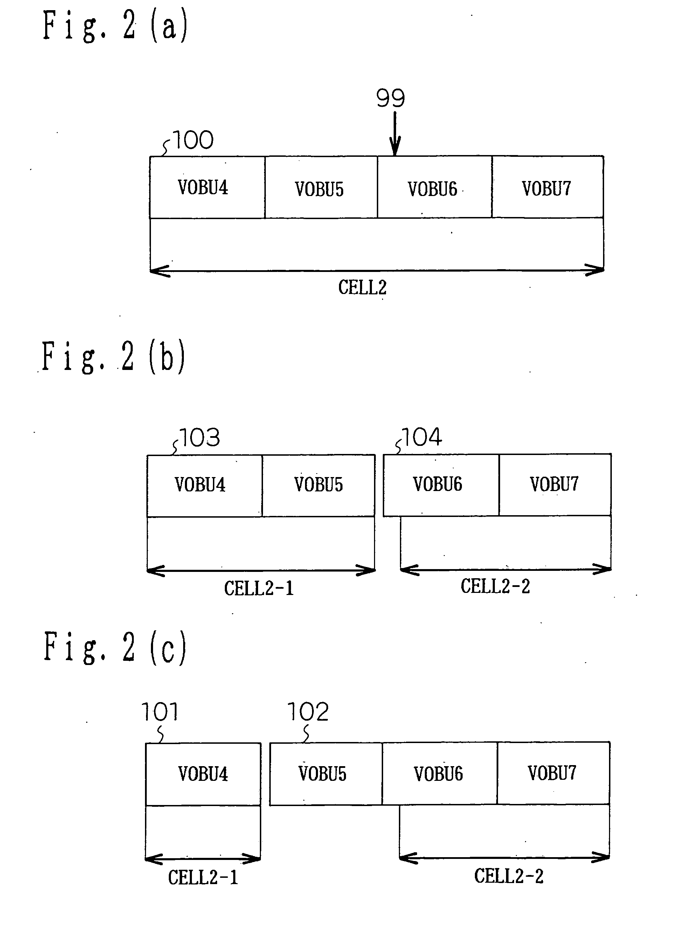

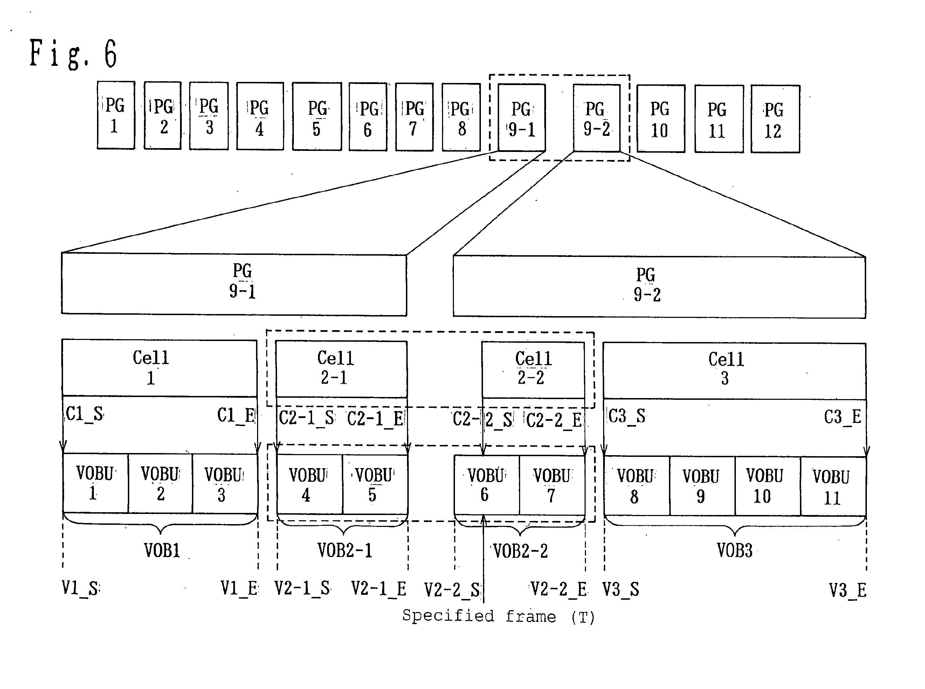

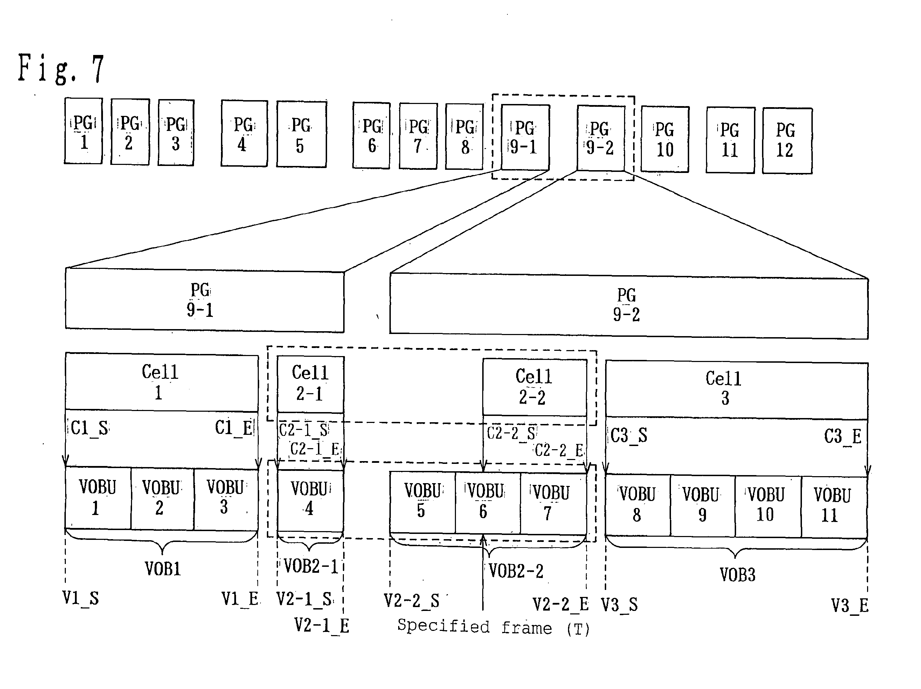

Described below next is the operation of editing the digital content recorded in the above-mentioned operation into the recording medium of the DVD-RAM. Figures 2(a)-(c) are diagrams illustrating content dividing. Each figure schematically shows MPEG streams, while the horizontal axis indicates time. In Figures 2 (a) - (c), the time advances in the direction from left to right as viewed. Figure 5 is a diagram showing detailed configuration of the management information before dividing, and corresponds to the diagram of Figure 2(a). Figure 6 is a diagram showing detailed configuration of the management information after dividing, and corresponds to the diagram of Figure 2(b). Figure 7 is a diagram showing detailed configuration of the management information after dividing, and corresponds to the diagram of Figure 2(c).

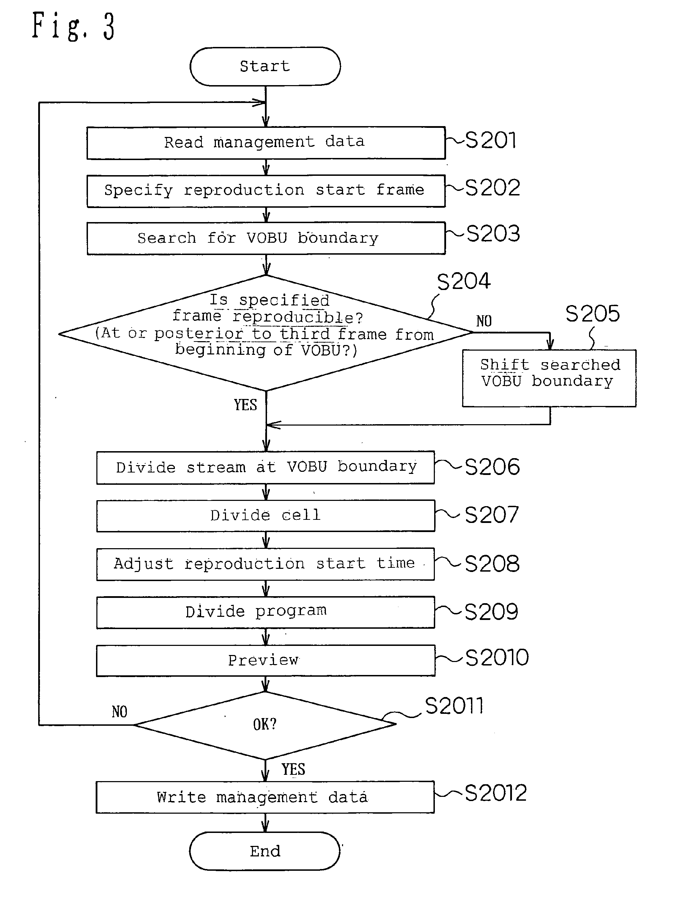

Numeral 100 in Figure 2(a) indicates an MPEG stream before dividing. Numerals 101-104 in Figures 2 (b) and (c) indicate MPEG streams after dividing. Figure 3 is a flowchart illustrating a dividing operation according to the invention. A digital content dividing method according to the present embodiment is described below with reference to Figures 2(a)-(c), 3, and the like.

First, management information which is the data of the management data structure storing the time information and the like of a digital content is read from a disk, that is, from the recording medium of the DVD-RAM, so that the situation is set to be ready for the reproduction and the like of a program (S201).

That is, the controlling section 54 instructs the disk controlling section 56 to read the management information from the disk. The disk controlling section 56 reads the data of the management data structure, that is, the management information, stored in the disk, and then outputs the data to the controlling section 54.

Figure 5 shows the management information of the stream 1 (100) shown in Figure 2 (a). That is, the disk controlling section 56 reads the management information of Figure 5 from the disk.

The management information of Figure 5 is described below. In Figure 5, an VOB (Video Object) is composed of a set of one or more VOBUs (Video Object Units). In Figure 5, the VOB1 serving as a VOB is composed of VOBUs indicated by VOBU1, VOBU2, and VOBU3. The VOB2 serving as a VOB is composed of VOBUs indicated by VOBU4, VOBU5, VOBU6, and VOBU7. The VOB3 serving as a VOB is composed of VOBUs indicated by VOBU8, VOBU9, VOBU10, and VOBU11.

The management information of each VOB contains the information of the start time and the end time. In Figure 5, the start time and the end time of the VOB1 are indicated respectively by V1_S and V1_E. The start time and the end time of the VOB2 are indicated respectively by V2_S and V2_E. The start time and the end time of the VOB3 are indicated respectively by V3_S and V3_E. Here, the V1_S and V2_E correspond respectively to the StartPTM and EndPTM of a VOB according to the video recording standard. The situation is the same for the V2_S, V2_E, V3_S, and V3_E.

A CELL indicates a reproduction unit of the data. The reproduction range of the VOB is set on the basis of the start time (time code) and the end time (time code) contained in the management information of the CELL, and then the time code information is converted into on-the-disk address information by using a time map table contained in each VOB. This permits access to desired stream data. These start time and end time are indicated respectively by C1_S and C1_E in Figure 5. The start time and the end time of a CELL2 are indicated respectively by C2_S and C2_E. The start time and the end time of a CELL3 are indicated respectively by C3_S and C3_E. Here, the C1_S and C2_E correspond respectively to the StartPTM and EndPTM of a CELL according to the video recording standard. The situation is the same for the C2_S, C2_E, C3_S, and C3_E.

In general, the start time and the end time of the CELL agree with the start time and the end time of the VOB. That is, the C1_S and C1_E store the values of V1_S and V1_E, respectively. The C2_S and C2_E store the values of V2_S and V2_E, respectively. The C3_S and C3_E store the values of V3_S and V3_E, respectively.

For the purpose of easy understanding of the management information of Figure 5, the operation during reproduction is briefly described below.

For example, when a PG9 which is a program according to the video recording standard is selected in reproduction, the CELL1, the CELL2, and the CELL3 specified by the PG9 are reproduced in this order. That is, when the reproduction of the PG9 starts, the VOBs specified by the CELL1, the CELL2, and the CELL3 are reproduced in the order of the direction from left to right as viewed. At that time, since the C1_S and the C1_E indicate respectively the V1_S and the V1_E, the VOBU1, the VOBU2, and the VOBU3 are all reproduced in this order. Similarly, in the CELL2 and the CELL3, the VOBU4-VOBU11 are all reproduced. That is, when the PG9 is selected, the data of VOBU1-VOBU11 corresponding thereto is all reproduced. As such, on the basis of the management information of Figure 5, the disk controlling section 56 reads and restores all the MPEG streams of VOBU1-VOBU11, and then outputs the streams to the controlling section 54. Then, the decoder 57 receives from the controlling section 54 the MPEG streams reproduced and restored in the disk controlling section 56, and then expands the compression of the received MPEG streams so as to output the streams as an audio-video signal to the signal outputting section 58. The signal outputting section 58 outputs the audio-video signal to an external device such as a display unit. The description of the management information of Figure 5 and its relevant description have been provided above.

After the controlling section 54 reads the management information from the disk in S201 so that the situation is set to be ready for the reproduction and the like of the program, a user browses the reproduced video of the stream 1 (100) displayed on a screen as shown in Figure 2 (a), and thereby specifies a frame at which dividing is desired (S202). That is, the reproduced video of the stream 1 (100) as shown in Figure 2 (a) is displayed on a display unit or the like connected to the signal outputting section 58. Then, the user browsing the reproduced video of the stream 1 (100) specifies via the inputting means 55 a frame at which dividing is desired.

For example, suppose, the user carries out dividing in the middle of the PG9 serving as a program, and the frame at which the dividing is specified happens to be a frame in the middle of the VOBU6 as indicated by the specified frame in Figure 5.

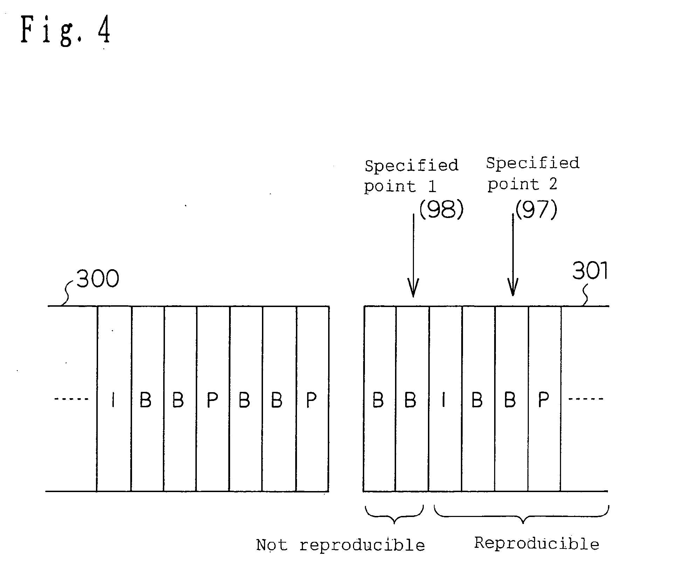

As shown in Figure 2(a), when a dividing frame is specified at a specified point 99 in VOBU6, the boundary between the VOBU5 and the VOBU6 becomes a candidate of dividing. Figure 4 shows the boundary between the VOBU5 and the VOBU6. In Figure 4, numeral 300 indicates the VOBU5, while numeral 301 indicates the VOBU6. In the figure, symbols I, P, and B indicate respectively an I frame, a P frame, and a B frame of MPEG. In Figure 4, the beginning of the VOBU6 is a B frame of MPEG.

When the point specified in S202 is located at the position of a specified point 2 (97) of Figure 4 (S203 and S204), the controlling section 54 divides the content at the boundary between the VOBU5 and the VOBU6. This is because the B frame of the specified reproduction start frame can be reproduced since the VOBU6 contains an I frame and a P frame. Accordingly, in this case, the stream is divided into a stream 4 (103) and a stream 5 (104) at the boundary between the VOBU5 and the VOBU6 as shown in Figure 2 (b) (S206).

Alternatively, when the point specified in S202 is located at the position of a specified point 1 (98) of Figure 4 (S204), if the stream were divided at the boundary between the VOBU5 and the VOBU6, no frames other than B frames would be present between the beginning of the VOBU6 and the specified point 1 (98). This prevents the reproduction of the B frame of the specified reproduction start frame. Accordingly, in order to permit the reproduction of the B frame located at the specified point 1 (98), the controlling section 54 performs the dividing such that the VOBU5 containing I and P frames is included (S205 and S206). This result is shown in Figure 2(c).

Figure 2 (c) shows the result that the stream is divided into the stream 2 (101) and the stream 3 (102) at the boundary between the VOBU4 and the VOBU5. In the stream 3 (102), reproduction can be started at the reproduction start frame specified at the specified point 99, by using the I frame and the P frame contained in the VOBU5.

As such, in the step (S204) of determining whether the specified reproduction start frame is reproducible or not, the controlling section 54 determines whether the specified reproduction start frame is reproducible by using only the data of the VOBU containing the frame, or not. When the frame is reproducible, dividing is performed at the boundary preceding the VOBU (S206). When the frame is not reproducible, dividing (S206) is performed at the boundary (S205) preceding the preceding VOBU.

Then, the controlling section 54 divides the cell in correspondence to the divided stream (S207). After that, the reproduction start time corresponding to the specified reproduction start frame is set as the reproduction start time of the cell after dividing (S208). Then, the digital content is divided into the former stream and cell and the latter stream and cell (S209). As a result, in Figure 2(b), dividing is performed such that the cell 2-1 corresponds to the stream 4 (103), and that the cell 2-2 corresponds to the stream 5. In Figure 2(c), dividing is performed such that the cell 2-1 corresponds to the stream 2 (101), and that the cell 2-2 corresponds to the stream 3 (102).

It should be noted that in Figure 2(b), the start time referred to by the cell 2-2 is not the start time of the VOBU6 but the time indicated by the specified point 99. Thus, the range referred to by the cell 2-2 is from the time of the specified point 99 of the VOBU6 to the end time of the VOBU7.

Further, in Figure 2(c), the start time referred to by the cell 2-2 is not the start time of the VOBU5 but the time indicated by the specified point 99. Thus, the range referred to by the cell 2-2 is from the time of the specified point 99 of the VOBU6 to the end time of the VOBU7.

The above-mentioned operation is described below in detail with focusing attention on how the management information is divided.

When an I frame is contained between the beginning of the VOBU6 and the specified point, the controlling section 54 performs the dividing between the VOBU5 and the VOBU6 as described in Figure 2 (b). When no I frame is contained between the beginning of the VOBU6 and the specified point, the controlling section 54 performs the dividing between the VOBU4 and the VOBU5 as described in Figure 2 (c). That is, the controlling section 54 divides the PG9 serving as a program, at the boundary preceding a VOBU containing the nearest I frame relative to the specified frame and located prior to the specified frame.

First, as shown in the management information after dividing shown in Figure 6, when an I frame is contained between the beginning of the VOBU6 and the specified point, the controlling section 54 performs the dividing between the VOBU5 and the VOBU6 as described above, so that the VOB2 before dividing is divided into a VOB2-1 and a VOB2-2. Correspondingly, the CELL2 before dividing is divided into a CELL2-1 and a CELL2-2. Further correspondingly, the PG9 before dividing is divided into a PG9-1 and a PG9-2.

After the VOB2 before dividing is divided into the VOB2-1 and the VOB2-2 as shown in Figure 6, the controlling section 54 counts howmany frames there are from the beginning of the VOBU6 to the specified frame, and then converts the number of frames into time.

When the start time of the VOB2-2 having been divided and newly created is denoted by V2-2_S, the time converted as described above is added to the V2-2_S, so that the time T of the specified frame is calculated.

Then, the controlling section 54 sets the start time C2-2_S of the CELL2-2 which is the latter of the divided CELLs, to be the time T. The controlling section 54 further sets the start time and the end time of each CELL other than C2-2_S, to be equal to the start time and the end time of each corresponding VOB. That is, in contrast to the prior art, the start time of the latter of the divided CELLs is not the start time V2-2_S of the VOB2-2 but is set to be T.

The controlling section 54 outputs the management information after dividing having been generated as described above, to the disk controlling section 56. The disk controlling section 56 records the management information of Figure 6 onto the disk in all the hierarchy from the PGC serving as a program chain to the VOBUs.

In reproduction, for example, suppose, the user selects the PG9-2 of Figure 6 by using the inputting section 55. Then, the inputting section 55 notifies the selection of the PG9-2 to the controlling section 54. The controlling section 54 controls the disk controlling section 56 to read the PG9-2, and controls the decoder 57 to decode the read-out MPEG stream.

Then, since the start time C2-2_S of the CELL2-2 which is the beginning CELL of the PG9-2 is T, the disk controlling section 56 and the decoder 57 start the reproduction at the frame of time T. As such, display starts at the frame of time T on the display unit connected to the signal outputting section 58.

That is, when the reproduction of the PG9-2 starts, the reproduction starts at the frame of time T. This realizes that the reproduction starts accurately at the frame specified by the user.

On the other hand, as shown in the management information after dividing shown in Figure 7, when no I frame is contained between the beginning of the VOBU6 and the specified point, the controlling section 54 performs the dividing between the VOBU4 and the VOBU5 as described above, so that the VOB2 before dividing is divided into a VOB2-1 and a VOB2-2. Correspondingly, the CELL2 before dividing is divided into a CELL2-1 and a CELL2-2. Further correspondingly, the PG9 before dividing is divided into a PG9-1 and a PG9-2.

After the VOB2 before dividing is divided into the VOB2-1 and the VOB2-2 as shown in Figure 7 , the controlling section 54 counts howmany frames there are from the beginning of the VOBU6 to the specified frame, and then converts the number of frames into time.

When the start time of the VOB2-2 having been divided and created newly is denoted by V2-2_S, the time converted as described above is added to the V2-2_S, so that the time T of the specified frame is calculated.

Then, the controlling section 54 sets the start time C2-2_S of the CELL2-2 which is the latter of the divided CELLs, to be the time T. The controlling section 54 further sets the start time and the end time of each CELL other than C2-2_S, to be equal to the start time and the end time of each corresponding VOB. That is, in contrast to the prior art, the start time of the latter of the divided CELLs is not the start time V2-2_S of the VOB2-2 but is set to be T.

The controlling section 54 outputs the management information after dividing having been generated as described above, to the disk controlling section 56. The disk controlling section 56 records the management information of Figure 7 onto the disk in all the hierarchy from the PGC serving as a program chain to the VOBUs.

In reproduction, suppose the user selects the PG9-2 of Figure 7 by using the inputting section 55. Then, the inputting section 55 notifies the selection of the PG9-2 to the controlling section 54. The controlling section 54 controls the disk controlling section 56 to read the PG9-2, and controls the decoder 57 to decode the read-out MPEG stream.

Then, since the start time C2-2_S of the CELL2-2 which is the beginning CELL of the PG9-2 is T, the disk controlling section 56 and the decoder 57 start the reproduction at the frame of time T. As such, display starts at the frame of time T on the display unit connected to the signal outputting section 58.

That is, when the reproduction of the PG9-2 starts, the reproduction starts at the frame of time T. This realizes that the reproduction starts accurately at the frame specified by the user.

Further, when the digital content is divided as described here, in the case of Figure 2(b), a portion not reproduced occurs in the beginning portion of the VOBU6. Similarly, in the case of Figure 2(c), a portion not reproduced occurs in the beginning portion of the VOBU5.

Thus , the function is provided that permits the preview and the check of the divided content before the divided content is written into a recordingmediumor the like (S2010). This permits the check of how the divided content is reproduced and then the final write into the recordingmedium. After the preview, when the reproduced content has no problem (S2011), the management information, that is, the data of the management data structure, is written (S2012). When the reproduced content has any problem (S2011), the management information before dividing is read again, so that dividing is performed again.

According to the previous description of the step (S204) of determining whether the specified reproduction start frame is reproducible or not, it is determined whether the specified reproduction start frame is reproducible or not by using only the data of the VOBU containing the frame. However, in many streams used presently, two frames in the beginning of a VOBU refer to a frame in the preceding VOBU. Thus, the boundary for the dividing may be determined on the basis of whether the specified reproduction start frame is located at or prior to or at or posterior to the third frame from the beginning of the VOBU.

In this case, when the position specified by the user is at or posterior to the third frame from the beginning of the VOBU, the stream is divided in the VOBU containing the specified position as shown in Figure 2(b). When the position specified by the user is at or prior to the third frame from the beginning of the VOBU, the stream is divided in the VOBU preceding the VOBU containing the specified position as shown in Figure 2(c).

According to the previous description of the step (S202) of specifying the reproduction start frame, the user specifies the frame with browsing the display screen. However, the user may directly input a frame number counted from the beginning of the stream, or alternatively may directly input time information.

The present embodiment is described for the case that the compression method is MPEG. However, any other compression method may be used, as long as the compression method generates the image with referring to the preceding and the following data.

In the present embodiment, the inputting section 55 receives a recording instruction issued by the user, and then notifies the issue of the recording instruction to the controlling section 54. However, the invention is not limited to this configuration. The inputting section 55 may receive from a timer a recording instruction issued on the basis of reserved recording, and then notify the issue of the recording instruction to the controlling section 54.

Further, in the present embodiment, the MPEG stream generated by the encoder 53 is outputted temporarily to the controlling section 54, and then inputted from the controlling section 54 to the disk controlling section 56. However, the invention is not limited to this configuration. The MPEG streamgeneratedby the encoder 53 maybe transferred directly to the disk controlling section 56.

The controlling section 54 of the present embodiment is an example of dividing means according to the invention. The inputtingmeans 55 of the present embodiment is an example of specifying means according to the invention. The specified frame of the present embodiment is an example of a reproduction start video frame according to the invention.

### [Embodiment 2]

### Embodiment 2 is described below.

Figure 1 shows the configuration of a recording and reproducing apparatus 51 according to Embodiment 2.

The recording and reproducing apparatus 51 according to Embodiment 2 is the same as that of Embodiment 1.

The operation of the present embodiment is described below with focusing attention on the difference from that of Embodiment 1.

The operation that the recording and reproducing apparatus 51 according to the present embodiment records an audio-video signal into the recording medium of the DVD-RAM is the same as that of Embodiment 1.

Described below next is the operation of editing the digital content recorded in the above-mentioned operation into the recording medium of the DVD-RAM.

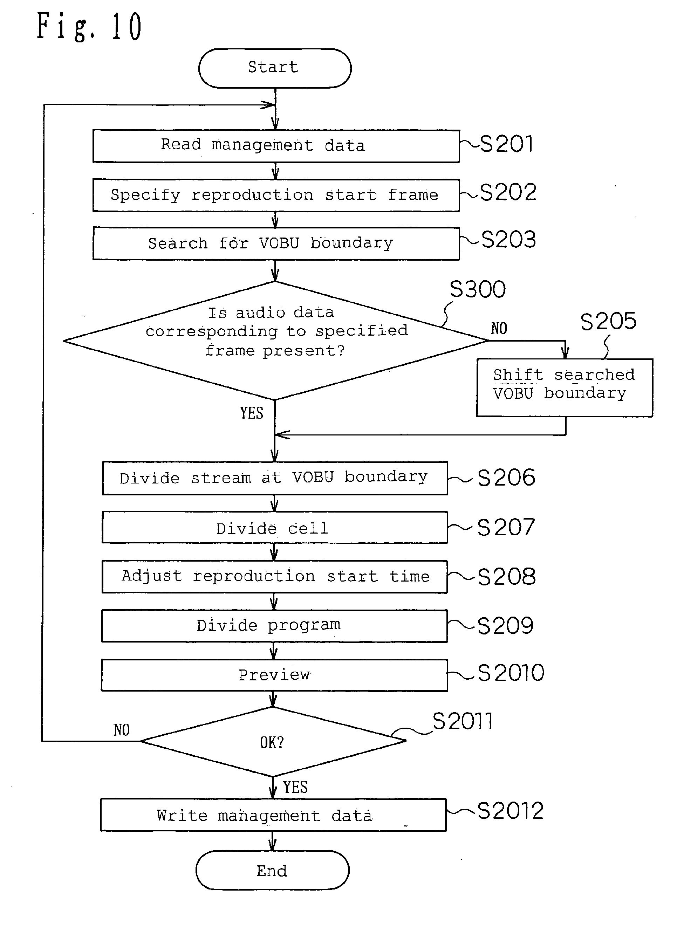

Figure 10 shows a flowchart illustrating a dividing operation according to the present embodiment. In the flowchart of Figure 10, the operation of S300 is different from that of Embodiment 1. The operations from S201 to S203 are the same as those of Embodiment 1. The operations from S206 to S2012 are also the same as those of Embodiment 1.

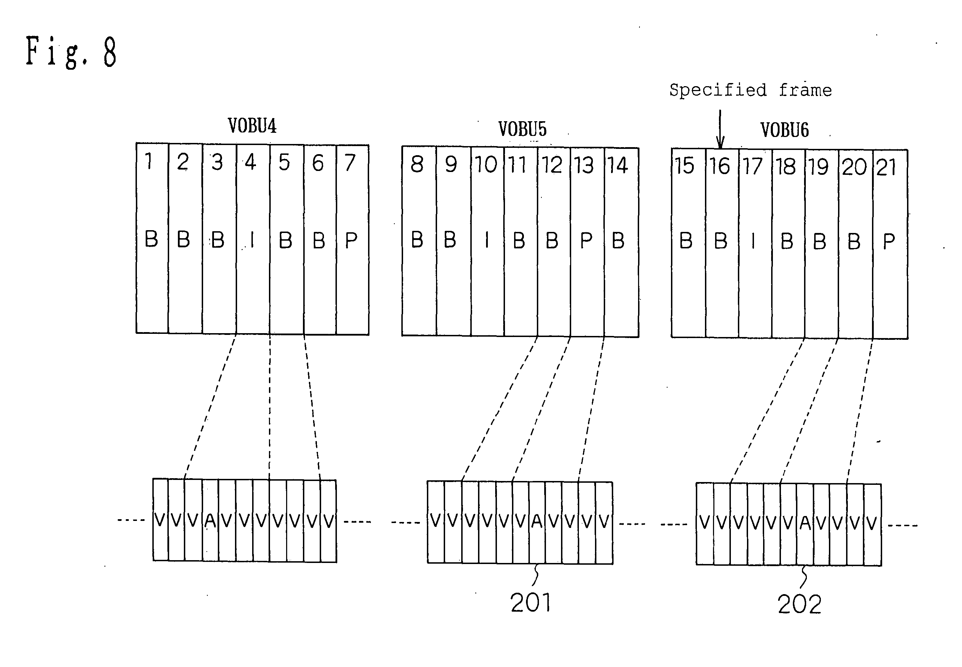

That is, Figure 5 is a diagram showing detailed configuration of management information before dividing. Figure 8 is a diagram showing detailed configuration of a VOBU4, a VOBU5, and a VOBU6 constituting a VOB2 corresponding to a CELL2 before dividing.

First, similarly to Embodiment 1, management information which is the data of the management data structure storing the time information and the like of a digital content is read from a disk, that is, from the recording medium of the DVD-RAM, so that the situation is set to be ready for the reproduction and the like of a program (S201).

That is, the controlling section 54 instructs the disk controlling section 56 to read the management information from the disk. The disk controlling section 56 reads the data of the management data structure, that is, the management information, stored in the disk, and then outputs the data to the controlling section 54.

Figure 5 shows the management information of the stream 1 (100) shown in Figure 2(a). That is, the disk controlling section 56 reads the management information of Figure 5 from the disk.

After the controlling section 54 reads the management information from the disk in S201 so that the situation is set to be ready for the reproduction and the like of the program, a user browses the reproduced video of the stream 1 (100) as shown in Figure 2(a) displayed on a screen, and thereby specifies a frame at which dividing is desired (S202). That is, the reproduced video as shown in Figure 2 (a) is displayed on a display unit or the like connected to the signal outputting section 58. Then, the user browsing the reproduced video of the stream 1 (100) specifies via the inputting means 55 a frame at which dividing is desired.

For example, the user carries out dividing in the middle of the PG9 serving as a program, while the frame at which the dividing is specified is a frame in the middle of the VOBU6 as indicated by the specified frame in Figures 5 and 8.

Here, as shown in Figure 8, the data of the VOBU is composed of video packs (V) and audio packs (A). Each video pack (V) or each audio pack (A) has generally a size of 2 Kbytes or the like. A video of one frame is composed of a large number of video packs (A). That is, each of the I, P, and B frames contained in the VOBU is composed of a plurality of video packs and audio packs.

The stream is constructed in such a manner that an audio pack is inserted between video packs. The amount of audio data is smaller than that of video data. Accordingly, audio data is not necessarily contained in every frame. For example, frame numbers are designated as shown in Figure 8, while audio data corresponding to the frame 10 through the frame 16 is contained in the audio pack 201. Further, audio data corresponding to the frame 17 through the frame 21 is contained in the audio pack 202. In this case, when the specified frame is the frame 16, if dividing is performed between the VOBU5 and the VOBU6, the audio data corresponding to the frame 16 will be contained in the audio pack 201 contained in the VOBU5. This would prevent the reproduction of the audio corresponding to the frame 16.

Thus, it is determined whether the audio data corresponding to the specified frame is contained between the beginning of the VOBU and the specified frame, or not. This determination is performed by referring to a time stamp contained in an audio pack header. When the audio data corresponding to the specified frame is contained between the beginning of the VOBU and the specified frame, dividing is performed at the boundary preceding the VOBU containing the specified frame. When the audio data corresponding to the specified frame is not containedbetween the beginning of the VOBU and the specified frame, dividing is performed at the boundary preceding the VOBU containing the audio pack containing the audio data corresponding to the specified frame.

In the example of Figure 8, the audio data corresponding to the frame 16 which is the specified frame is contained in the audio pack 201. The audio pack 201 is, in turn, contained in the VOBU5. Thus, dividing is performed at the boundary between the VOBU5 and the VOBU4.

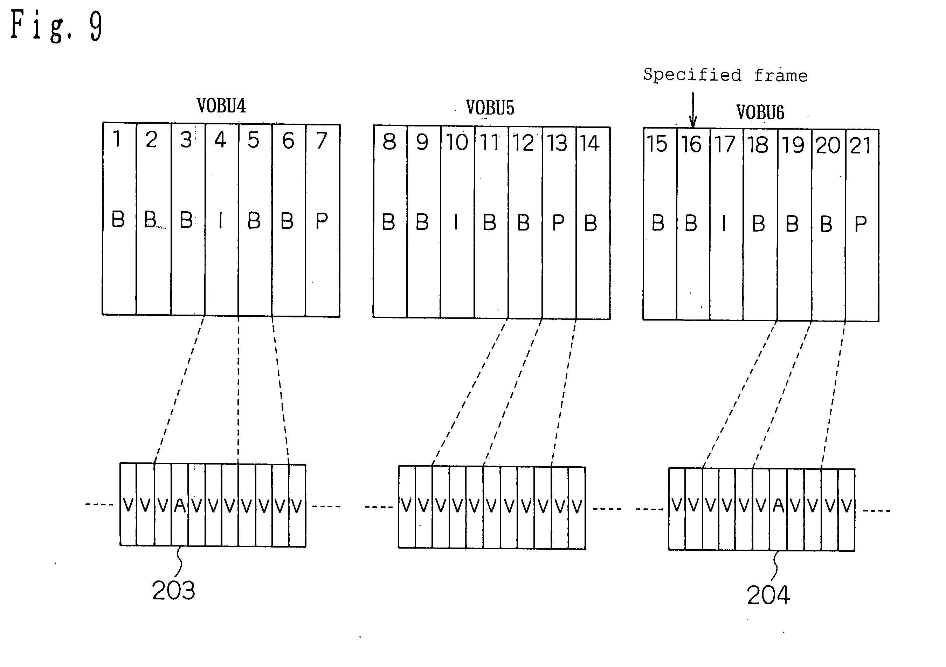

Another example is shown in Figure 9. In Figure 9, the specified frame is the frame 16. Further, the audio pack 203 contained in the VOBU4 contains the audio data corresponding to the frame 14 through the frame 16. The audio pack 204 contains the audio data corresponding to the frame 17 through the frame 21. The audio pack 204 is contained in the VOBU6.

In the example of Figure 9, the audio data corresponding to the frame 16 which is the specified frame is contained in the audio pack 203, while the audio pack 203 is contained in the VOBU4. Thus, dividing is performed at the boundary between the VOBU4 and the VOBU3.

As such, in S300, S205, and S206, the controlling section 54 performs dividing at the boundary preceding the VOBU containing the nearest audio pack prior to the specified frame, so as to divide the program. The method of dividing the VOB, the CELL, and the program and the method of setting the start time and the end time of the VOB and the CELL are the same as those of Embodiment 1, and hence detailed description is omitted.

As described above, according to the present embodiment, the latter of the divided programs contains the audio data corresponding to the specified frame. This allows the reproduction of the audio to start accurately at the specified frame.

The operation of reproduction is the same as that of Embodiment 1, and hence detailed description is omitted.

Further, the modulations described in Embodiment 1 are similarly applicable also in Embodiment 2.

Embodiment 1 has been described for the case that the controlling section 54 reproduces the latter of the divided programs accurately starting at the specified frame. However, the controlling section 54 can also reproduce the former of the divided programs and complete accurately at the specified frame.

Thus, described below with reference to Figure 5 is the case that the controlling section 54 reproduces the former of the divided programs and completes accurately at the specified frame.

For example, the specified frame specifying the end of reproduction is located in the middle following the beginning of the VOBU6. In this case, when an I frame is contained between the specified frame in the VOBU6 and the last frame of the VOBU6, dividing is performed between the VOBU6 and the VOBU7. When no I frame is contained between the specified frame and the last frame of the VOBU6, dividing is performed in such a manner that the portion until the VOBU7 are included into the former of the divided programs, and that the portion starting from the VOBU8 are included into the latter of the divided programs.

That is , the controlling section 54 divides the program at the position following the VOBU containing the nearest I frame posterior to the specified frame specifying the end of reproduction.

The specified frame of the present embodiment is an example of a reproduction end video frame according to the invention.

The frame of the present embodiment is an example of a video frame according to the invention.

Embodiment 1 has been described for the case that the latter of the divided programs is reproduced accurately starting at the specified frame, while Embodiment 2 has been described for the case that the audio of the latter of the divided programs is reproduced accurately starting at the specified frame. However, the invention is not limited to this configuration. That is, in the dividing of the program, dividing may be performed at the boundary which is the prior of the two of the boundary preceding the nearest VOBU relative to the specified frame and located prior to the specified frame and the boundary preceding the VOBU containing the nearest audio pack relative to the specified frame and located prior to the specified frame. This permits the reproduction of the latter of the divided programs to start accurately at the specified frame, and also the reproduction of the audio to start accurately at the specified frame.

The program according to the invention is a program which causes a computer to execute the functions of all or part of the means (or apparatuses, devices, and the like) of the above-mentioned digital content dividing apparatus according to the invention, and which works in cooperation with the computer.

The recording medium according to the invention is a recording medium which carries a program for causing a computer to execute all or part of the functions of all or part of the means (or apparatuses, devices, and the like) of the above-mentioned digital content dividing apparatus according to the invention, wherein: the medium is computer readable; and the read-out program performs the above-mentioned functions in cooperation with the computer.

The above-mentioned "part of the means (or apparatuses, devices, and the like) " of the invention indicates a piece or pieces of means among a plurality of pieces of the means. The above-mentioned "part of the steps (or processes, operations, effects, and the like)" of the invention indicates a step or steps among a plurality of the steps.

The above-mentioned "functions of the means (or apparatuses, devices, and the like)" of the invention indicate all or part of the functions of the means.

A mode of use of a program according to the invention may be that the program is recorded in a computer-readable recording medium and works in cooperation with a computer.

A mode of use of a program according to the invention may be that the program is transmitted through a transmitting medium, read out by a computer, and works in cooperation with the computer.

Data structure according to the invention includes a database, a data format, a data table, a data list, and a data type.

The scope of the recording media includes a ROM and the like, while the scope of the transmitting media includes a transmitting medium such as the Internet, as well as light, radio waves, acoustic waves, and the like.

The above-mentioned computer according to the invention is not restricted to genuine hardware such as a CPU, and may be firmware, an OS, and a peripheral device.

As described above, the configuration according to the invention may be implemented by software or hardware.

As described above, according to the present embodiments, the position of dividing a stream data constituting a program of digital content is adjusted, and the reproduction start position of the divided cell is adjusted. This allows the program to be divided without discrepancy from the point specified by a user, and also permits the reproduction to start accurately at the point specified by a user.

Further, the preview function allows the divided content to be recorded after the check of the reproduction state. This permits the dividing of a program in such a manner that the user specification is well reflected. INDUSTRIAL APPLICABILITY

As seen from the above-mentioned description, the invention provides a digital content dividing apparatus, a digital content reproducing apparatus, a digital content dividing method, a program, and a recording medium, which allow reproduction to start accurately at a position specified by a user, in the case that a content is divided.

Further, the invention provides a digital content dividing apparatus, a digital content reproducing apparatus, a digital content dividingmethod, a program, and a recording medium, which allow reproduction to complete accurately until a position specified by a user, in the case that a content is divided.

## Claims

1. A digital content dividing apparatus wherein when a reproduction start video frame is specified in a digital content which is recorded in a video recording standard and which comprises a plurality of programs each constructed from a plurality of CELLs each comprising a plurality of VOBUs each comprising video frames composed of an I frame, a P frame, and/or a B frame, said program is divided at a boundary of said VOBU, and wherein said apparatus comprises:
specifying means of specifying a reproduction start video frame; and
dividing means of carrying out dividing at a position preceding a VOBU containing the nearest I frame prior to said reproduction start video frame having been specified, so as to divide said program.

2. A digital content dividing apparatus according to Claim 1, wherein in the dividing of said program, when said CELL is divided, said dividing means sets the reproduction start time of the latter part of said divided CELL to be the time corresponding to said reproduction start video frame.

3. A digital content reproducing apparatus for reproducing a program divided by the digital content dividing apparatus according to Claim 2, wherein
in the reproduction of the latter part of said divided program, when said CELL is divided, reproduction starts at the video frame specified by the reproduction start time of the latter part of said divided CELL.

4. A digital content dividing method wherein when a reproduction start video frame is specified in a digital content which is recorded in a video recording standard and which comprises a plurality of programs each constructed from a plurality of CELLs each comprising a plurality of VOBUs each comprising video frames composed of an I frame, a P frame, and/or a B frame, said program is divided at a boundary of said VOBU, and wherein said method comprises:
a specifying step of specifying a reproduction start video frame; and
a dividing step of carrying out dividing at a position preceding a VOBU containing the nearest I frame prior to said reproduction start video frame having been specified, so as to divide said program.

5. A program for causing a computer to serve as:
the specifying means of specifying a reproduction start video frame; and
the dividing means of carrying out dividing at a position preceding a VOBU containing the nearest I frame prior to said reproduction start video frame having been specified, so as to divide said program; of the digital content dividing apparatus according to Claim 1.

6. A computer-processable recording medium carrying the program according to Claim 5.
